# EUROPEAN PATENT APPLICATION

(11) **EP 2 244 461 A2**
(43) Date of publication of application: **27.10.2010**
(21) Application number: 10159848.0
(22) Date of filing: 14.04.2010
(51) Int. Cl.: H04N 5/225, H04N 5/243, H04N 17/00

(54) **Digital camera and method for testing the function of a digital camera**

(30) Priority: 20.04.2009 DE 102009018095
(71) Applicant: Carlo Gavazzi Services AG, 6312 Steinhausen (CH)
(72) Inventor: Sørensen, Kent, 8541 Skødstrup (DK); Thorsen, Per, 8260 Viby J (DK); Wehner, Nikolaj, 8410 Rønde (DK); Valbjørn, Keld Benner, 8370 Hadsten (DK)
(74) Representative: Kehl, Günther

(57) **Abstract**

The invention refers to a digital camera 1 which can be used in a motion sensor 4. In order to be able to test the function of the camera, a light source 3 is provided which irradiates at least a part of the sensing matrix 2. The processor device 5 of the camera judges whether the output signal of the sensing matrix 2 corresponds correctly to the light which has irradiated the sensing matrix 2.

Various test methods are disclosed, such as using varying wavelengths, ON/OFF-modulation, dependence on shutter time and illumination of various regions of the sensing matrix 2.

## Description

Motion sensors, for example motions sensors for door opening, of the prior art mostly work with Doppler-Radar. In other words, when an object or person approaches the sensor, a radar beam emitted from the sensor will be reflected by the object or person and the reflected beam will expierence a frequency shift (Doppler-Effect). The reflected radiation will be recognized by the motion sensor. However, objects which move very slowly cannot be detected due to too low or non-existent Doppler-Effect.

Using a camera in motion sensors provides better results, especially when slowly moving or still objects should be detected. However, cameras can fail due to defects in their recognition system.

It is therefore an object of the present invention to provide a digital camera which can be easily and reliably tested as to its proper function.

It is also an object of the present invention to provide a test method for testing the function of a digital camera which may be part of a motion sensor device.

The above-mentioned objects are achieved by a digital camera and a method as claimed in the independent claims.

Advantageous embodiments are the subject matter of the dependent claims.

According to particular advantageous embodiments the digital camera comprises a processor device which is adapted to read out signals from the sensing element and analyses whether the read out signals correspond correctly to the electromagnetic radiation which is irradiated onto the sensing element by the radiation source. The radiation source, which may be a light source, may comprise several light elements, such as LEDs, which can be controlled individually. The light elements may be selected to emit different wavelengths and/or different intensities. Also an on/off-modulation may be provided.

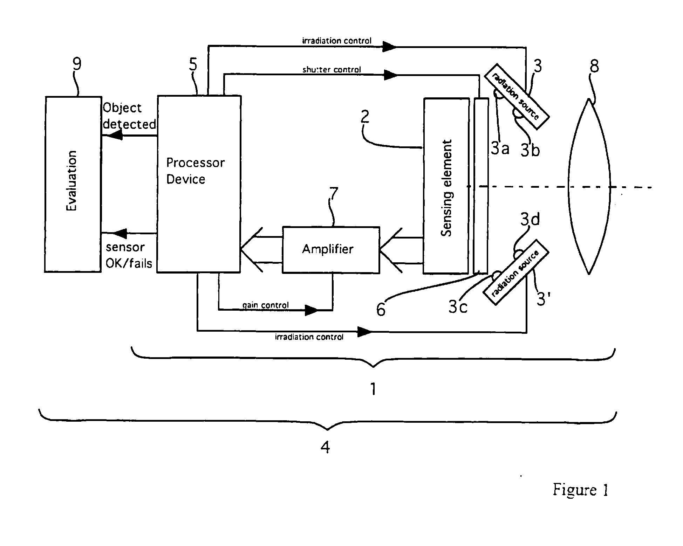

For better understanding of the objects and features of the present invention a preferred embodiment will be described in greater detail with reference to the accompanying drawing:

The drawing shows schematically a motion sensor device which includes a digital video camera 1according to the invention. The digital video camera 1comprises a sensing element 2 which has a square array or matrix of pixels. In front of the sensing element 2 there is shutter 6 which can be opened or closed. In the open status of the shutter light can travel from the camera lens 8 to the sensing element 2. In the closed status of the shutter the light passage from the camera lens 8 to the shutter 6 is obstructed, i.e. no light from outside the camera can fall onto the sensing element 2. The digital video camera I further comprises a processor device 5 which receives data from the sensing element 2. An amplifier 7 with variable gain is provided which receives the pixel data from the sensing element 2 and outputs the data to the processor device 5. The processor device 5 is connected to an evaluation station 9. The processor device 5 is also connected to the gain control input of the amplifier 7. Further, the processor device 5 is connected to the trigger input of the shutter 6.

Radiation sources 3, 3' are provided between the optical camera lens 8 and the shutter 6. Each of the radiation sources 3, 3' comprises radiation elements 3a, 3b and 3c, 3d, respectively. In this example the radiation elements are light emitting diodes (LED). The radiation sources 3, 3' are arranged in such a manner that - when the shutter 6 is open - the radiation from the radiation elements 3a, 3b, 3c and 3d falls on the light sensitive face of the sensing element 2. The radiation sources 3. 3' are connected to the processing device 5 in such a manner that each radiation element 3a, 3b, 3c, 3d can be controlled individually by the processor device 5. Consequently, each radiation element 3a, 3b, 3c, 3d can be switched ON or OFF and can be dimmed independently from the other radiation elements 3a, 3b, 3c, 3d.

In the test phase a radiation source 3 sends out its light onto the sensing element directly, i.e. not through the lens 8 of the camera 1. While in the latter case only a small fraction of the matrix would be irradiated, the light will illuminate the whole sensing element 2 when the radiation source 3 is placed inside the camera 1 housing next to the sensing element 2.

In the following different test setup variations will be discussed:
1) Light applied to the camera sensing element 2 can test the whole sensing element 2 or parts of it.
   a. The sensing element 2 shall be tested for safety reasons. This means that the whole picture field or parts of the field shall detect any object within the field. To ensure this function the requirement is that the pixels in the specified field shall respond to the applied light.
   b. When the response from the pixel is detected, the signal passes through the camera processing and the µP processing. Dependent of the signal processing the whole sensing element 2 or part of the sensing element 2 is included in the test.
2) Variation of shutter time in camera used in 1) can test the whole sensing element 2 or parts of the sensing element 2.
   a. The camera can be tested as in 1). If light is applied on the camera sensing element 2 a change in the shutter time will change the response of each pixel in the camera.
3) Variation of gain in camera used in 1) can test the whole sensing element 2 or parts of the sensing element 2.
   a. The camera can be tested as in 1). If light is applied on the camera chip a change in the gain will change the response of each pixel in the camera.
4) Light applied to the edge of the camera chip used in 1) can test the whole sensing element 2 or parts of the sensing element 2.
   a. The camera can be tested as in 1). In this situation the light is applied from the edge of the camera chip.
5) On/off modulation of light used in 4) can test the whole sensing element 2 or parts of the sensing element 2.
   a. When the light is applied as in 4) turning the light source on and off can vary the applied intensity.
6) Characteristic variation of the light intensity over the camera chip used in 5), can test the whole sensing element 2 or parts of the sensing element 2.
   a. When the light is applied from the edge of the camera chip as in 5), the intensity will be high close to the light source and weak in a distance from the light source. This gives a characteristic variation of the light intensity over the camera chip.
   b. The characteristic intensity variation can test if some addressing failure is present when the camera chip is read. In some cases addressing failures can result in the same readout from to different pixels despite the light intensity on the two pixels arc different. In this case the failure can be revealed.
7) Light from a specified number of light sources used in 6) can test the whole sensing element 2 or parts of the sensing element 2.
   a. To ensure revealing of any addressing failure different light sources as in 6) can be combined. This gives light combinations, which are unique for each pixel.
8) Light from specified positions of light sources used in 7) can test the whole sensing element 2 or parts of the sensing element 2.
   a. To strengthen uniqueness of the light intensity in 7) positions of the light sources can be specified.
9) Light sources with different wavelengths used in a given combination and a given time multiplexing used in 8) can test the whole sensor or parts of the sensing element 2.
   a. To strengthen uniqueness of the light intensity in 8) different wavelength can be used. To separate the wavelength the light sources shall be sequentially turned on and off (Time multiplexing). This will increase the possibility for revealing addressing failures in a colour-sensing camera.

## Claims

1. Digital camera comprising an electronic sensing element (2), **characterised by** at least one radiation source (3, 3') which is adapted to irradiate electromagnetic radiation onto at least part of the sensing element (2).

2. Digital camera as claimed in claim 1, **characterised in that** the digital camera (1) is part of a motion sensor device (4).

3. Digital camera as claimed in claim 1 or 2, **characterised in that,** the digital camera (1) is a video camera.

4. Digital camera as claimed in anyone of claims 1 to 3. **characterised in that** the digital camera (1) comprises at least one processor device (5).

5. Digital camera as claimed in claim 4, **characterised in that** the processor device (5) includes a microprocessor.

6. Digital camera as claimed in claim 4 or 5, **characterised in that** the processor device (5) is adapted to control the radiation source (3, 3') to send out radiation onto at least part of the sensing element (2).

7. Digital camera as claimed in anyone of claims 4 to 6, **characterised in that** the processor device (5) is adapted to read out signals from the sensing element (2) and is further adapted to analyse whether the read out signals correspond correctly to the electromagnetic radiation which is irradiated onto the sensing element (2) by the radiation source (3, 3').

8. Digital camera as claimed in anyone of claims 1 to 7. **characterised in that** the radiation source (3) comprises more than one radiation element (3a, 3b, 3c, 3d), wherein each of the radiation elements (3a, 3b, 3c, 3d) is directed to different parts of the sensing element (2).

9. Digital camera as claimed in claim 8. **characterised in that** at least some of the radiation elements (3a, 3b, 3c, 3d) emit radiation of different wavelengths.

10. Digital camera as claimed in anyone of claims 1 to 9, **characterised in that** the digital camera (1) comprises a shutter (6) which is adapted to apply radiation onto the sensing element for a given time interval.

11. Digital camera as claimed in claim 10, **characterised in that** the processor device (5) is further adapted to analyse whether the read out signals correspond correctly to the given time interval.

12. Digital camera as claimed in anyone of claims 1 to 11, **characterised in that** the digital camera (1) is provided with a variable gain amplifier (7), wherein the processor device (5) is adapted to control the gain factor of the amplifier and is further adapted to analyse whether the read out signals correspond correctly to the selected gain factor.

13. Method for testing the function of a digital camera (1), having a sensing clement (2), particularly a video camera which is part of a sensor device (4), **characterised by** the step of irradiating electromagnetic radiation onto at least part of the sensing element (2).

14. Method for testing the function of a digital camera (1) as claimed in claim 13, **characterised by** the step of reading out signals from the sensing element (2) and the step of analysing whether the read out signals correspond correctly to the electromagnetic radiation which is irradiated onto the sensing element (2).

15. Method as claimed in claims 13 or 14, **characterised by** the step of sending out radiation predominantly onto a selected part of the sensing element (2).

16. Method as claimed in claim 15, **characterised by** the step of sending out radiation from an edge of the sensing element (2).

17. Method as claimed in anyone of claims 13 to 16, **characterised by** the step of sending out radiation onto the sensing element (2) with an on/off-modulation.

18. Method as claimed in anyone of claims 13 to 17, **characterised by** the step of sending out radiation onto the sensing element (2) with a characteristic variation of the irradiation intensity over the sensing element (2).

19. Method as claimed in anyone of claims 13 to 18, **characterised by** the step of providing a shutter (6) for applying radiation onto the sensing element (2) for a given time interval and by the step of analysing whether the read out signals correspond correctly to the given time interval.

20. Method as claimed in anyone of claims 13 to 19, **characterised by** the steps of:
a) providing the digital camera (1) with a variable gain amplifier (7);
b) controlling the gain factor of the amplifier and
c) analysing whether the read out signals correspond correctly to the selected gain factor.

21. Method as claimed in anyone of claims 13 to 20, **characterised by** the steps of:
a) irradiating the sensing element (2) with electromagnetic radiation varying in wavelength as a function of time:
b) analysing whether the read out signals correspond correctly to the wavelength of the applied radiation.
